Europäisches Patentamt

European Patent Office

Office européen des brevets

(11) Publication number: **0 484 698 A1**

# EUROPEAN PATENT APPLICATION

(21) Application number: **91117530.5**

(22) Date of filing: **15.10.91**

(51) Int. Cl.5: **H02H 3/33**

(30) Priority: **08.11.90 IT 4577090**

(43) Date of publication of application:
**13.05.92 Bulletin 92/20**

(84) Designated Contracting States:
**DE ES FR GB IT**

(71) Applicant: **Zanussi Elettrodomestici S.p.A.**
**Via Giardini Cattaneo, 3, C.P. 147**
**I-33170 Pordenone(IT)**

(72) Inventor: **Frucco, Giuseppe**
**Via Tiro a Segno 25**
**I-33170 Pordenone(IT)**
Inventor: **Bravin, Daniele**
**Via Ponte Luma 32**
**I-33082 Azzano X, Pordenone(IT)**

(74) Representative: **Dalla Rosa, Adriano et al**
**PROPRIA Srl Via Mazzini 13**
**I-33170 Pordenone(IT)**

(54) **Differential-type electronic safety device for household appliances.**

(57) Differential-type electronic safety device for electric home appliances such as clothes washing and drying machines, dishwashers, refrigerators and the like, capable of protecting said appliances against the risks deriving from current leakages.

Device consisting of at least an electric winding (18) wound about a toroidal magnetic core (12) along with two inductance coils (10, 11) in a phase-opposition arrangement of a traditional interference suppression filter (1), connected upstreams of the electric circuit of the appliance through an electric switch (5). Such electric winding (18) is affected by the opposing magnetic fields generated by the inductance coils (10,11) and, in the presence of an unbalance between said fields, corresponding to a current leakage towards ground, an electromotive force is generated in the same winding, which is then amplified and compared in a comparator (24) against a pre-set reference voltage corresponding to the highest allowable leakage current, with resulting energization or de-energization of the appliance depending on the result of said comparison.

EP 0 484 698 A1

The present invention relates to a differential-type electronic safety device for household appliances, in particular clothes washing and drying machines, dishwashers, and similar appliances, said device being capable of protecting said appliances against the risks brought about by leakage currents, ie. currents leaking towards mass.

As widely known, household appliances such as clothes washing and drying machines, dishwashers and similar machines are currently manufactured without any particular kind of device being normally provided in said appliances for protection against leakage currents, and this owing to both the fact that electric live parts of said appliances are in any case provided with electric insulating materials and systems that are designed in compliance with most demanding safety standard requirements, and are therefore able to ensure a very high reliability in operation, and the fact that mandatory law and standard provisions generally require that suitably rated and sized differential-type protection circuit breakers of a *per se* known type (ie. so-called ground fault interrupters) be provided in the sites where such appliances are being installed so that they will automatically cut off the power supply to said appliances whenever a faulty or a functional short-circuit condition arises in the same appliances under generation of current leakages towards mass in excess of pre-established safety values (generally equal to or higher than 30 mA), which would therefore involve a dangerous situation for anyone touching the appliances concerned.

The practice has however shown that electric insulating materials and systems used in the afore mentioned appliances regularly tend to undergo a degradation process and, therefore, to gradually lose much of their insulating properties in the long run, so that current leakages towards mass can actually arise which, under particular operating conditions of said appliances (ie. possible electric faults or failures, presence of water acting as a good electric conductor, etc.), can turn out as being quite dangerous for the life of people entering into contact with the appliances involved.

Furthermore, it may well also happen that a ground-fault interrupter or circuit breaker of the afore mentioned type has not yet being applied in the site where such household appliances are being installed, so that even in such a circumstance the same problems can be originated by said appliances due to the above illustrated causes and reasons

It is the purpose of the present invention to do away with the afore mentioned drawbacks by providing an electronic safety device for household appliances of the afore described type, which is very simple in its construction and very reliable in its operation, is designed for being directly built-in or integrated in the appliance design, and is implemented in such a way as to ensure a most effective protection of said appliances in the presence of possible current leakages towards mass.

Such a safety device is designed and built with the characteristics that are essentially described with particular reference to the herewith appended claims.

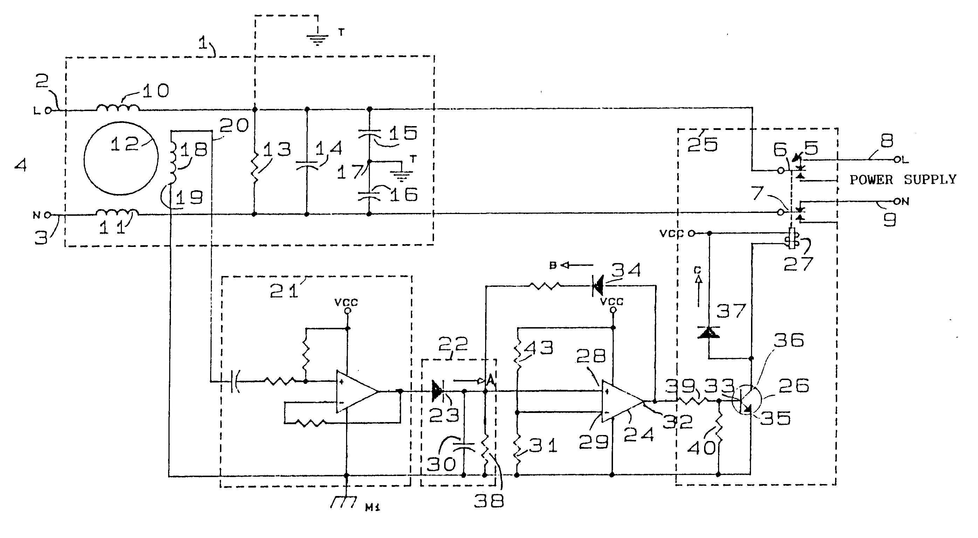

For a better understanding, the invention will be anyway further described by way of non-limiting example with reference to the accompanying drawing in which the Figure is the electric circuit diagram of the safety device according to the present invention, as integrated in a household appliance design.

Referring in particular to said Figure, it can be seen that it shows the electric circuit diagram of the safety device according to the invention, which is installed in such a household appliance as a clothes washing machine, a clothes drying machine, a combined clothes washing and drying machine, a dishwashing machine, a refrigerator and the like, and which essentially comprises at least a filter 1 for eliminating the electric disturbance noise generated by the repeatedly occurring switching cycles of the driving motor (not shown) and the various electromagnetically operated component parts (not shown). As usual in the art, such a filter consists of a plurality of capacitors and inductance coils that are differently connected to each other and energized through a main conductor lead 2 and the neutral wire 3 of the external power supply mains 4, and are further connected on the upstream side of the machine through a switch 5 consisting of two electric contacts 6 and 7, which are connected with the conductor leads 2 and 3, respectively, are are capable of being actuated to open and to close with respect to the remaining corresponding conductor leads 8 and 9 of the electric circuit of the machine.

In the herein described example, the filter 1 is formed in an advantageous way by two inductance coils 10 and 11, which are connected to the main conductor lead 2 and the neutral conductor lead 3, respectively, and are tightly wound about a toroidal magnetic core 12 in a push-pull configuration, ie. in phase opposition with respect to each other, as well as by a resistor 13, a capacitor 14, and two further capacitors 15 and 16 that are arranged in series and connected to earth T through their common junction point 17, all said components being connected in parallel with the two conductor leads 2 and 3.

The safety device according to the present invention essentially comprises at least an electric winding 18 which also appears to be wound about the toroidal magnetic core 12 in a position situated between the two afore described inductance coils 10 and 11, so that it is capable of being affected by both alternating, mutually opposing magnetic fields generated by said inductance coils, said electric winding being connnected with the reference mass M1 of an electronic circuit through its terminal 19, while by means of its other terminal 20, through the series arrangement formed by an amplifier 21 of a traditional type, at least a rectifier 22 of a *per se* known type, eg. formed by a diode 23 and a capacitor 30 with a resistor 38 in parallel, as well as by a trigger-type comparator 24, it is connected with a driver 25 which is for instance formed by a transistor 26 and a relay 27 capable of being driven by said transistor 26, said relay 27 being connected electrically in the electric circuit of the machine and mechanically with the electric contacts 6, 7 of the switch 5, said relay 27 being further capable of actuating said electric contacts by causing them to close or to open with respect to the conductor leads 8 and 9 of the electric circuit of the machine according to the energized or de-energized condition of the same relay.

In particular, the diode 23 is connected downstream with respect to the amplifier 21 and is biased in such a way as to be able to level the electric current that has been amplified by said amplifier, thereby allowing it to flow only in the direction shown by the arrow A, towards the next trigger comparator 24.

Said trigger comparator 24 is provided with a first and a second input 28 and 29 which are respectively connected in series with the diode 23 and a direct reference voltage derived through a resistive divider (resistors 31 and 43) from the pre-determined supply voltage Vcc, and which are both connected with the mass M1 through the capacitor 30, a resistor 38 and a resistor 31, respectively. The same trigger comparator 24 is further provided with an output 32 which is connected both with the base 33 of the transistor 26, through a resistor 39, and the mass M1 through both the resistor 39 and the resistor 40, as well as with the first input 28 of the same comparator 24 through a feedback circuit in which at least a diode 34 is used, said diode 34 being biased in such a way as to only allow the current to flow from said output 32 towards said first input 28 of said trigger comparator 24, following the direction shown by the arrow B, for the reason that will be better described below.

The purpose of said trigger comparator 24 is to compare the reference voltage derived from the resistive divider 43, 31, and applied to its second input 29, against the levels of the direct voltage being applied across the capacitor 30 and, therefore, to the input 28 of the same comparator through the leveling diode 23, as determined by the electromotive force induced through the electric winding 18 when, following a current leakage towards ground (as shown in the Figure through a dashed line connecting the main conductor lead 2 with the earth T) and the voltage drop resulting therefrom, currents with a different intensity are caused to flow through the two inductance coils 10 and 11 provided in the circuit. As a consequence, said currents therefore generate alternating magnetic fluxes having a different intensity and being in phase opposition with each other.

According to the result of such a voltage comparation, the output 32 of the trigger comparator 24 is therefore switched from one of its logic states to the other one, in which the transistor 26 will then act to energize or de-energize the relay 27 and, as a consequence, to actuate the contacts 6 and 7 of the switch 5 in order to cause them to close or to open, thereby switching on or off the power supply to the machine. Furthermore, said output 32 of said trigger comparator 24 will be continuously kept switched over to such a state, thanks to the provision of said feedback circuit (diode 34) connected with the first input 28 of the same comparator, until it is caused to again switch over to its other logic state, eg. by cutting off the power supply (not shown in the Figure) to the circuit.

In particular, the reference voltage applied to the second input 29 of the trigger comparator 24 is selected with a pre-determined level corresponding to the condition in which the current leakage towards ground has reached an intensity (equal to approx. 30 mA) that may prove dangerous for people.

In this way, in the presence of an electromotive force induced in the electric winding 18 and generating at the first input 28 of said comparator a voltage having a lower level than that of the reference voltage applied to the second input 29 of the same comparator, ie. a condition in which the leakage current in the machine has an intensity which is lower than the one corresponding to the afore stated threshold value considered as representing a dangerous situation for people, the trigger comparator 24 will keep its output 32 switched in a determined logic state, in which the transistor 26 remains non-conductive and, therefore, the relay 27 is de-energized and the switch 5 is closed (ie. the power supply is on).

In the opposite case, ie. in the presence of an electromotive force induced in the electric winding 18 and generating at said first input 28 of said comparator 24 a voltage having a level equal to the one of the reference voltage applied to said second input 29 of the same comparator 24, ie. a condition in which the leakage current in the machine has reached an intensity corresponding to or even exceeding said threshold value representing a dangerous condition for people, said trigger comparator 24 will act so as to let its output 32 switch over to its other logic state, in which the transistor 26 will then become conductive and, therefore, the relay 27 will be energized and the switch 5 will open, thereby cutting off the power supply.

The transistor 26 is in turn connected with both the mass M1, through its emitter 35, and the relay 27 through its collector 36, at least a diode 37, added to the circuit in view of eliminating overvoltages, being connected in parallel with said relay 26.

Furthermore, the electric winding 18 is arranged about the toroidal core 12 in such a way that, under normal operating conditions of the machine, ie. when no leakage current towards ground is generated and, therefore, the same current flows through both inductance coils 10 and 11 generating two alternating and mutually opposing magnetic fields that nullify each other, no electromotive force is induced through said electric winding 18.

Under these conditions, owing to the fact that the first input 28 of said comparator 24 is not live either, ie. has no applied voltage, while the second input 29 of the same comparator 24 is on the contrary well subjected to the reference voltage, it therefore ensues that the logic state of the output 32 of said comparator 24 remains unaltered, so that the comparator 24 itself will keep the transistor 26 in its non-conductive state and, as a consequence, the relay 27 in its energized state and the switch 5 in its closed state.

On the contrary, when due to the afore illustrated reasons there is a unbalance between said magnetic fields, electromotive forces are generated in the electric winding 18 which are proportional thereto and affect the logic states of both the inputs 28 and 29 and the output 32 of said comparator 24 in the way and to the purposes that have been described afore.

In the case where the safety device according to the present invention would be caused to trip when the machine is operating, thereby cutting off the power supply to the same machine in the afore described way, ie. whereby the relay 27 is de-energized and is kept in such a state in order to keep the machine constantly switched off, it will only be possible to reset said relay 27 by acting manually on appropriate push-buttons specifically provided for resetting the relay as soon as the faulty conditions in the machine are removed.

It will be appreciated that the safety device according to the present invention may also be implemented in other ways differing from the one that has been described afore by mere way of example, for instance by providing a filter 1 having functional components connected in a different way as compared with the described ones, a comparator 24 and a driver 25 that are made up with the use of different component parts, etc., provided that such a safety device is in all cases capable of causing the power supply to the appliance it is called to protect to be correspondingly switched on and off through a differential-type system consisting of at least an electric winding 18 arranged and operating in the afore described way, without departing from the scopes of the invention.

The safety device implemented according to anyone of the above considered embodiments can be directly mounted and connected in any appliance, thereby ensuring full and reliable protection thereof against leakage currents, even in the case of absence of suitable ground fault interrupters or circuit breakers duly installed on the building side, or a possible malfunction of these protection devices when duly provided in the building, and/or buildings that are provided with an electrical system lacking an effective grounding or with no grounding at all.

Finally, the above described safety device according to the present invention is capable to be integrated in the form of a single component part which is therefore easy to install in the appliances to be protected and, as a consequence, it is economically viable and convenient to use in the practice.

## Claims

1. Differential-type electronic safety device for household appliances such as clothes washing machines, clothes drying machines, dishwashing machines, refrigerators and the like, comprising a filter for suppressing EMI disturbances generated by switching cycles of their electrically operated component parts, said filter being provided with a plurality of inductance coils and capacitors connected with each other in different ways, as well as at least a first and a second inductance coils that are tightly wound in phase opposition with respect to each other about a preferably toroidally shaped magnetic core, said filter being further connected with the electric circuit of the appliance where it is mounted through at least an electric switch capable of being actuated to open and to close by a driver of a traditional type, characterized by induced means (18) associated with said first and second inductance coils (10, 11) and capable of being affected by the alternating magnetic fields produced by said coils in such a way that an electromotive force is only generated in the case of a unbalance condition existing between said magnetic fields in the presence of current leakages in the appliance, as well as characterized by comparison means (24) connected with said induced means (18) and said driver (25) and capable of causing said electric switch (5) to close or to open through said driver (25) as a result of the comparison between the electromotive force generated by said induced means (18), and corresponding to the intensity of the current leakage, and a pre-determined reference voltage corresponding to the highest allowable intensity of the leakage current.

2. Safety device according to claim 1, characterized in that said induced means comprise at least an electric winding (18) wound about said magnetic core (12) in a position situated between said first and said second inductance coils (10, 11), said electric winding (18) being connected with the mass (M) of the appliance through one of its terminals (19) and, through amplifier means (21) and rectifier means (22) of a traditional type, with said comparison means (24) through its other terminal (20).

3. Safety device according to claim 2, characterized in that said comparison means comprise at least a comparator (24) provided with a first and a second inputs (28, 29), which are connected in series with said rectifier means (22) and with said pre-determined reference voltage (Vcc), respectively, as well as provided with an output (32) connected with said driver (25) and with said first input (28) through a feedback circuit comprising unidirectional conduction means (34) capable of allowing the current to only flow from said output (32) towards said first input (28).

POWER SUPPLY

EP 0 484 698 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 056 797 (TRIDENT EQUIPMENT)<br>* page 1, line 40 - line 59; figures 1,2 *<br>--- | 1-3 | H02H3/33 |
| X | GB-A-2 170 367 (ATREUS ENTERPRISES)<br>* page 1, line 47 - line 58; figure *<br>--- | 1-3 | |
| X | EP-A-0 116 105 (CLAUDE)<br>* page 4, line 16 - page 5, line 9; figure 2 *<br>--- | 1-3 | |
| A | US-A-4 574 324 (PACKARD)<br>* abstract; figure *<br>----- | 1-3 | |
| | | | TECHNICAL FIELDS SEARCHED (Int. Cl.5)<br><br>H02H |

The present search report has been drawn up for all claims

| Place of search | Date of completion of the search | Examiner |
|---|---|---|
| BERLIN | 24 FEBRUARY 1992 | KEMPEN P. |

EPO FORM 1503 03.82 (P0401)